# EUROPÄISCHE PATENTANMELDUNG

(11) **EP 0 965 490 A2**
(43) Veröffentlichungstag der Anmeldung: **22.12.1999**
(21) Anmeldenummer: 99111084.2
(22) Anmeldetag: 17.06.1999
(51) Int. Cl.: B60R 16/00

(54) **Vorrichtung zur Betätigung einer Kontakteinrichtung**

(30) Priorität: 19.06.1998 DE 29811043 U
(71) Anmelder: TRW Automotive Safety Systems GmbH & Co. KG, 63743 Aschaffenburg (DE)
(72) Erfinder: Bohn, Stefan, 63773 Goldbach (DE)
(74) Vertreter: Degwert, Hartmut, Dipl.-Phys.

(57) **Zusammenfassung**

Zur Betätigung einer in einem Lenkrad angeordneten Kontakteinrichtung (3) ist eine Betätigungseinrichtung vorgesehen, die etwa in Richtung der Lenkradachse gegen einen Rückstellwiderstand relativ zum Lenkrad um ein bestimmtes Maß beweglich angeordnet ist. Die Betätigungseinrichtung (1) ist über quer zur Lenkradachse elastisch ausknickbare Stege (2) mit dem Lenkrad (8) verbunden.

## Beschreibung

Die Erfindung betrifft eine Vorrichtung zur Betätigung einer in einem Lenkrad ortsfest angeordneten Kontakteinrichtung mittels einer etwa in Richtung der Lenkradachse gegen einen Rückstellwiderstand relativ zum Lenkrad um ein bestimmtes Maß beweglich angeordneten Betätigungseinrichtung.

Derartige Betätigungsvorrichtungen werden insbesondere zur Auslösung eines Hupsignals in Lenkrädern von Kraftfahrzeugen angeordnet, damit sie vom Fahrer gut erreichbar sind, und damit ein Loslassen des Lenkrades nicht oder nur sehr kurzzeitig erforderlich ist. Sie sind üblicherweise nach Art eines Tastschalters aufgebaut, d.h. die Kontaktierung erfolgt durch Druck auf einen Betätigungsbereich, der durch elastische Kräfte in seine Ausgangsstellung zurückgestellt wird, sobald der Druck nachläßt. Derartige Kontakteinrichtungen werden nicht nur zur Auslösung eines Hupsignals, sondern auch für verschiedene andere Funktionen benutzt, bei denen es darauf ankommt, daß die Lenkradbetätigung möglichst nicht beeinträchtigt wird.

Bei den heute üblicherweise mit einem Airbagmodul ausgestatteten Lenkrädern wird als Betätigungseinrichtung in vielen Fällen die Abdeckkappe des Airbagmoduls benutzt, die selbst eine Reihe anderer Funktionen erfüllen muß, wodurch ihre konstruktive Ausgestaltung als als Betätigungseinrichtung sehr erschwert ist.

Man hat schon vorgeschlagen, zwischen dem zusammengefalteten Luftsack und der Abdeckkappe eine Kontaktfolie ortsfest anzuordnen und die Abdeckkappe derart elastisch rückstellbar mit dem Lenkrad zu verbinden, daß sie insgesamt niederdrückbar ist, daß der erwünschte Kontakt aber auch dann hergestellt wird, wenn die Abdeckkappe nur einseitig in einem Randbereich niedergedrückt wird. Dies hat zwangsläufig zur Folge, daß die Kontaktfolie bei einer Auslösung des Airbags mit zerstört wird und daß sie so ausgestaltet und befestigt werden muß, daß von ihr keine Verletzungsgefahr ausgehen kann.

Die Betätigungsrichtung für im Lenkrad angeordnete Kontakteinrichtungen wird üblicherweise in Richtung der Lenkradachse bewegt, wobei auch der in engen Grenzen einzuhaltende Kontaktabstand in Richtung der Lenkradachse gemessen wird. Dies bringt insbesondere bei mit Airbagmodulen ausgestatteten Lenkrädern verschiedene konstruktive Schwierigkeiten mit sich, weil Anordnung und Auslösung eines Airbagmoduls vielfach Maßnahmen erfordern, die einer optimalen Anordnung einer Kontakteinrichtung zuwiderlaufen.

Es besteht somit die Aufgabe, eine Kontakteinrichtung vorzuschlagen, deren Betätigung in üblicher, gewohnter Weise erfolgen kann, deren Anordnung sich konstruktiv leicht von den Einbaubedingungen für Airbagmodule entkoppeln läßt, so daß für die unterschiedlichen Funktionen keine unnötigen konstruktiven Kompromisse eingegangen werden müssen.

Zur Lösung dieser Aufgabe wird eine Vorrichtung der eingangs genannten Art vorgeschlagen, die dadurch gekennzeichnet ist, daß die Betätigungseinrichtung über quer zur Lenkradachse elastisch ausknickbare Stege oder über einen quer zur Lenkradachse elastisch ausknickbaren Faltenbalg bzw. Faltenbalgabschnitte mit dem Lenkrad verbunden ist.

Durch das erfindungsgemäße Ausknicken der Befestigungsmittel für die Betätigungseinrichtung wird eine quer zur Lenkradachse gerichtete Kontaktschließung ermöglicht, die in vielen Fällen platzsparend sein kann, sich im übrigen aber wesentlich leichter außerhalb des für ein Airbagmodul benötigten Einbauraumes anordnen läßt. Die erfindungsgemäß ausknickbaren Befestigungsmittel können gleichzeitig so ausgelegt werden, daß sie auch die notwendigen Rückstellkräfte für die Betätigungseinrichtung und das Öffnen der Kontakte erzeugen können.

Vorteilhafte Ausgestaltungen und Weiterbildungen des Erfindungsgedankens sind in den Unteransprüchen 2 bis 16 beschrieben. Weitere Einzelheiten werden anhand der in den Figuren 1 bis 3 dargestellten Ausführungsbeispiele näher erläutert. Es zeigen:
- Figur 1 einen vertikalen Teilschnitt durch den Airbagbereich eines Lenkrades;
- Figur 2 einen vertikalen Teilschnitt gemäß Figur 1 für eine zweite Ausführungsform; und
- Figur 3 einen vertikalen Teilschnitt gemäß Figur 1 für eine dritte Ausführungsform.

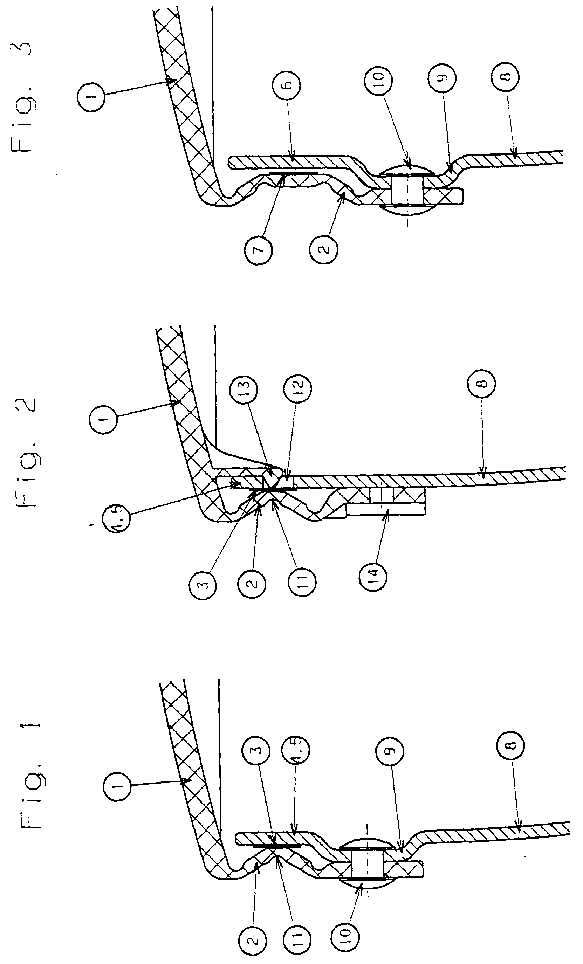

Bei dem Ausführungsbeispiel gemäß Figur 1 ist die Abdeckkappe 1 über Stege 2 mit einem Generatorträger 8 des Airbagmoduls verbunden. Der Generatorträger 8 ist topfförmig mit einem etwa parallel zur Lenkradachse verlaufenden Rand 9 ausgebildet, wobei eine zur Lenkradachse konzentrisch angeordnete Zylinderfläche 5 als Kontaktträger 4 dient. Die Stege 2 der Abdeckkappe 1 sind am Rand 9 des Generatorträgers 8 verbunden, wobei Nieten 10, Schrauben oder dergl. Verwendung finden können. Auf der Zylinderfläche 5 des Kontaktträgers 4 ist entweder umlaufend oder abschnittsweise eine Kontaktfolie 3 aufgebracht, mittels derer der erforderliche Kontakt hergestellt wird, wenn ein ausreichend hoher Druck aufgebracht wird. Dabei muß das druckaufbringende Teil der Betätigungseinrichtung praktisch keinen Betätigungsweg zurücklegen, maßgeblich ist nur, daß ein bestimmter Mindestdruck ausgeübt wird. Bei der Ausführungsform gemäß Figur 1 sind die Stege 2 mit einer Knickstelle 11 ausgestattet, die an der Kontaktfolie 3 anliegt oder aber ihr im Ausgangszustand mit geringem Abstand gegenübersteht. Bei einem Druck auf die Abdeckkappe 1 knicken die Stege 2 quer zur Lenkradachse nach innen ein, wodurch der erforderliche Druck auf die Kontaktfolie 3 ausgeübt wird. Anstelle einzelner Stege 2 kann auch ein umlaufender oder abschnittsweise angeordneter Faltenbalg vorgesehen werden.

Die Ausführungsform gemäß Figur 2 unterscheidet sich von derjenigen gemäß Figur 1 nur durch die Art der Befestigung für die Abdeckkappe 1. Am Generatorträger 8 sind Laschen 14 vorgesehen, in die die Stege 2 der Abdeckkappe 1 eingeschoben werden können. Außerdem weist die Abdeckkappe 1 nach innen gerichtete Klipse 13 auf, die bei der Montage in Ausnehmungen 12 des Generatorträgers 8 eingreifen. Die Kontaktfolie 3 ist, wie im Ausführungsbeispiel gemäß Figur 1, auf einer zur Lenkradachse konzentrischen Zylinderfläche 5 des Kontaktträgers 4 aufgebracht. Die Stege 2 besitzen Knickstellen 11, die bei einem Druck auf die Abdeckkappe 1 quer zur Lenkradachse gegen die Kontaktfolie angedrückt werden.

Bei der Ausführungsform gemäß Figur 3 sind mehrere feststehende Kontaktzungen 6 vorgesehen, die am oberen Ende des parallel zur Lenkradachse verlaufenden Randes 9 des Generatorträgers 8 ausgebildet oder angebracht sind. Zweite, elastisch auslenkbare Kontaktzungen 7 sind an den Stegen 2 der Abdeckkappe 1 bzw. an einem umlaufenden oder bereichsweise angeordneten Faltenbalg angebracht. Die Stege 2 können wie bei dem Ausführungsbeispiel gemäß Figur 1 am Generatorträger befestigt sein.

Die Kontaktgebung mittels quer zur Lenkradachse ausknickbarer Stege oder dergl. eröffnet eine Reihe von Möglichkeiten, die Kontaktgebungs- und Airbagfunktionen konstruktiv zu entkoppeln und erlaubt außerdem eine sehr platzsparende Anordnung der Kontakteinrichtung.

## Patentansprüche

1. Vorrichtung zur Betätigung einer in einem Lenkrad angeordneten Kontakteinrichtung mittels einer etwa in Richtung der Lenkradachse gegen einen Rückstellwiderstand relativ zum Lenkrad um ein bestimmtes Maß beweglich angeordneten Betätigungseinrichtung, dadurch gekennzeichnet, daß die Betätigungseinrichtung (1) über quer zur Lenkradachse elastisch ausknickbarer Stege (2) mit dem Lenkrad verbunden ist.

2. Vorrichtung nach Anspruch 1, dadurch gekennzeichnet, daß als Kontakteinrichtung eine druckempfindliche Kontaktfolie (3) vorgesehen ist, die auf einem sich in Richtung der Lenkradachse erstreckenden Kontaktträger (4) angeordnet ist.

3. Vorrichtung nach Anspruch 1 oder 2, dadurch gekennzeichnet, daß der Kontaktträger (4) eine zur Lenkradachse konzentrische Zylinderfläche (5) aufweist, auf der ein umlaufender Streifen einer Kontaktfolie (3) aufgebracht ist.

4. Vorrichtung nach Anspruch 3, dadurch gekennzeichnet, daß auf der Zylinderfläche (5) Streifenabschnitte einer Kontaktfolie (3) aufgebracht sind.

5. Vorrichtung nach Anspruch 4, dadurch gekennzeichnet, daß die Kontaktfolie (3) Unterbrechungen aufweist.

6. Vorrichtung nach Anspruch 1, dadurch gekennzeichnet, daß als Kontakteinrichtung wenigstens eine erste feststehende Kontaktzunge (6) und wenigstens eine zweite elastische, auslenkbare Kontaktzunge (7) vorgesehen ist, die mittels eines Steges (2) bzw. eines Faltenbalges radial zur Lenkradachse gegen die erste Kontaktzunge (6) andrückbar ist.

7. Vorrichtung nach Anspruch 6, dadurch gekennzeichnet, daß die Kontaktzungen (6, 7) sich im wesentlichen in Richtung der Lenkradachse erstrecken.

8. Vorrichtung nach Anspruch 6 oder 7, dadurch gekennzeichnet, daß mehrere Kontaktzungenpaare (6, 7) in einem zur Lenkradachse konzentrischen Bereich und in Umfangsrichtung verteilt angeordnet sind.

9. Vorrichtunng nach einem der Ansprüche 1-8, dadurch gekennzeichnet, daß als Betätigungseinrichtung die Abdeckkappe (1) für ein im Lenkrad untergebrachtes Airbagmodul dient.

10. Vorrichtung nach Anspruch 9, dadurch gekennzeichnet, daß die Abdeckkappe (1) über Fangbänder und Stege (2) mit dem Lenkrad verbunden ist.

11. Vorrichtung nach Anspruch 9 oder 10, dadurch gekennzeichnet, daß ein fest mit dem Lenkrad verbundener Generatorträger (8) vorgesehen ist, der topfförmig mit einem etwa parallel zur Lenkradachse verlaufenden Rand (9) ausgebildet ist und daß die Abdeckkappe (1) über ausknickbare Stege (2) mit diesem Rand (9) verbunden ist.

12. Vorrichtung nach Anspruch 11, dadurch gekennzeichnet, daß am Rand (9) des Generatorträgers (8) oberhalb der Befestigungsstelle (10) für die Stege (2) eine Kontaktfolie (3) angeordnet ist.

13. Vorrichtung nach Anspruch 12, dadurch gekennzeichnet, daß die Knickstelle (11) der Stege (2) der Kontaktfolie (3) radial gegenüberliegend angeordnet sind.

14. Vorrichtung nach Anspruch 11, dadurch gekennzeichnet, daß erste Kontaktzungen (6) am umlaufenden Rand (9) des Generatorträgers (8) und daß zweite Kontaktzungen (7) an den Knickstellen (11) der Stege (2) angeordnet sind.

15. Vorrichtung nach Anspruch 14, dadurch gekennzeichnet, daß die Knickstellen (11) der Stege (2) gleichzeitig als Sollbruchstellen ausgebildet sind.

16. Vorrichtung nach Anspruch 14, dadurch gekennzeichnet, daß die Stege (2) mit dem Rand (9) des Generatorträgers (8) mittels Klipsen (13) verbunden sind, die in Ausnehmungen (12) des Generatorträgers (8) eingreifen und sich bei einer Aktivierung des Airbags lösen.

17. Vorrichtung nach einem der vorstehenden Ansprüche, dadurch gekennzeichnet, daß die Stege (2) durch einen Faltenbalg oder Faltenbalgabschnitt gebildet sind.
